**Europäisches Patentamt**

**European Patent Office**

**Office européen des brevets**

(19)

(11) Veröffentlichungsnummer : **0 505 753 B1**

(12)

# EUROPÄISCHE PATENTSCHRIFT

(45) Veröffentlichungstag der Patentschrift :
**06.04.94 Patentblatt 94/14**

(51) Int. Cl.$^5$ : **C02F 1/72**

(21) Anmeldenummer : **92103209.0**

(22) Anmeldetag : **26.02.92**

(54) **Verfahren zum Entgiften von Cyanhydrine und/oder Nitrile enthaltenden wässrigen Lösungen.**

Die Akte enthält technische Angaben, die nach dem Eingang der Anmeldung eingereicht wurden und die nicht in dieser Patentschrift enthalten sind.

(30) Priorität : **27.03.91 DE 4110056**

(43) Veröffentlichungstag der Anmeldung :
**30.09.92 Patentblatt 92/40**

(45) Bekanntmachung des Hinweises auf die Patenterteilung :
**06.04.94 Patentblatt 94/14**

(84) Benannte Vertragsstaaten :
**AT BE CH DE DK ES FR GB GR IT LI LU NL PT SE**

(56) Entgegenhaltungen :
**DE-A- 2 352 856**
**FR-A- 2 347 315**
**US-T-102905 (WILLIAM H. KIBBEL)**

(73) Patentinhaber : **Degussa Aktiengesellschaft**
**Weissfrauenstrasse 9**
**D-60311 Frankfurt (DE)**

(72) Erfinder : **Diehl, Manfred, Dr.**
**Zeuläckerstrasse 40**
**W-6000 Frankfurt 60 (DE)**
Erfinder : **Fischer, Joachim**
**Buchbergstrasse 3**
**W-6458 Rodenbach (DE)**
Erfinder : **Wolf, Hubert**
**Am Nussberg 19**
**W-6451 Hammersbach (DE)**

EP 0 505 753 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung richtet sich auf ein Verfahren zum Entgiften von Cyanhydrine, insbesondere Glykolnitril, und/oder Nitrile enthaltenden wäßrigen Lösungen, die zusätzlich Zersetzungskatalysatoren für Peroxidverbindungen, insbesondere Manganverbindungen, enthalten, durch Perhydrolyse der Cyanoverbindungen mit Peroxidverbindungen.

Abwässer, welche Cyanide und/oder Cyanhydrine oder Nitrile enthalten, lassen sich nach dem Verfahren der US 3,970,554 durch Zusatz von Peroxidverbindungen bei Temperaturen von 10 bis 80 °C und pH-Werten von 6 bis 12 in Gegenwart von Jodidionen und ggf. Silberionen entgiften. Als bevorzugte Peroxidverbindung wird Wasserstoffperoxid herausgestellt. Zwar werden in diesem Dokument auch Perborate, Percarbonate und Peroxide als wirksam bezeichnet, der Vergleich des Tests 10 (Beispiel 2) mit dem Test 25 (Beispiel 7) läßt aber die Überlegenheit von Wasserstoffperoxid gegenüber Perborat erkennen, weil im Falle des Perborats die dreifache Reaktionszeit erforderlich war, um den Cyanidgehalt unter 0,1 mg/l abzusenken.

Es hat sich gezeigt, daß sich Glykolnitril enthaltende Abwässer, wie sie beispielsweise bei der Wäsche von Cyanwasserstoff enthaltenden Abgasen in Gegenwart von Formaldehyd anfallen, nicht befriedigend mit Wasserstoffperoxid entgiften lassen, wenn gleichzeitig Manganverbindungen anwesend sind. In der Hüttenindustrie findet zur Reinigung von Gichtgasen das Verfahren gemäß EP-B 0 223 904 Anwendung, wobei im Gaswaschkreislauf Formaldehyd zur Glykolnitrilbildung eingespeist und gebildetes Glykolnitril der Perhydrolyse unter Verwendung von Wasserstoffperoxid unterworfen wird. Bei der Behandlung der Waschwässer aus der Ferromangan-Produktion kommt es durch das Mangan im Waschwasser zu einer starken Zersetzung von Wasserstoffperoxid, so daß eine vollständige Perhydrolyse gar nicht oder nur durch Anwendung sehr großer $H_2O_2$-Überschüsse möglich ist. Damit werden aber die Wirtschaftlichkeit des Abgas-/Abwasserreinigungsverfahrens in Frage gestellt oder gar die behördlichen Grenzwerte an toxischen Stoffen nicht erreicht. Die vorbekannte Entgiftung von wäßrigen Lösungen, welche Cyanhydrine und/oder Nitrile enthalten, kann außer durch Mn-Verbindungen auch durch die Anwesenheit anderer Zersetzungskatalysatoren für Peroxidverbindungen, wie insbesondere Kupferverbindungen und Aktivkohle, bezüglich Effektivität und Wirtschaftlichkeit gemindert werden.

Bei der "Perhydrolyse" werden die Cyanhydrine bzw. Nitrile mittels Peroxidverbindungen in die den Cyanhydrinen bzw. Nitrilen zugrundeliegenden nicht-toxischen Hydroxycarbonsäuren bzw. Carbonsäuren überführt, beispielsweise also Glykolnitril in Glykolsäure. Die Hydroxycarbonsäuren bzw. Carbonsäuren können in an sich bekannter Weise mittels Peroxidverbindungen oder biologisch weiter abgebaut werden. Der Gehalt an Cyanhydrinen in wäßrigen Lösungen läßt sich mittels solcher Cyanidbestimmungsverfahren ermitteln, in welchen das Cyanhydrin in die Carbonylverbindung und HCN gespalten und letzteres aus dem Gleichgewicht zur Cyanidbestimmung abgezogen wird, beispielsweise durch Alkalisieren auf pH >12 und argentometrische Titration unter potentiometrischer Endpunktindikation. Die Nitrile lassen sich beispielsweise mittels chromatographischer Verfahren bestimmen.

Aufgabe der Erfindung ist, ein Verfahren zur Entgiftung von Cyanhydrine und/oder Nitrile mit jeweils 2 bis 5 C-Atomen, insbesondere Glykolnitril, enthaltenden wäßrigen Lösungen, die zusätzlich Zersetzungskatalysatoren für Peroxidverbindungen, insbesondere Manganverbindungen, wie Mn(II)-Salze und $MnO_2$, enthalten, durch Perhydrolyse der Cyanoverbindungen mit Peroxidverbindungen bei Temperaturen von 5 bis 80 °C und pH-Werten von 8 bis 12 zu schaffen, das eine weitergehendere Entgiftung erlaubt und/oder eine geringere Einsatzmenge an Peroxidverbindungen erfordert und/oder eine Verkürzung der Reaktionszeit ermöglicht, als dies bei dem vorbekannten Verfahren unter Verwendung von Wasserstoffperoxid möglich war.

Gelöst wird die Aufgabe dadurch, daß man zur Perhydrolyse als Peroxidverbindung Natriumpercarbonat der Formel $Na_2CO_3 \cdot 1,5 H_2O_2$ in einer Menge von mindestens 2,5 Äquivalenten Aktivsauerstoff pro Mol Cyanhydrin verwendet.

Die zu entgiftenden Cyanhydrine stellen Reaktionsprodukte von Aldehyden oder Ketonen mit 1 bis 4 C-Atomen und Cyanwasserstoff dar; im alkalischen Milieu stehen die Reaktanden im Gleichgewicht mit dem Cyanhydrin. Cyanhydrine enthaltende wäßrige Lösungen. welche zusätzlich Manganverbindungen enthalten, können beispielsweise aus Waschprozessen von Gichtgasen der Hüttenindustrie und Rauchgasen von Müllverbrennungsanlagen sowie aus Prozeßabwassern der chemischen Industrie resultieren. Die wirksame und wirtschaftliche Entgiftung von Glykolnitril enthaltenden Lösungen, wie sie in Waschverfahren gemäß EP-B 0 223 904 oder ähnlichen Verfahren anfallen, ist technisch von größter Bedeutung. Nitrile enthaltende Abwässer fallen gegebenenfalls bei Nitrilsynthesen an.

Es wurde, wie aus den Vergleichsbeispielen 2 und 3 hervorgeht, gefunden, daß die Verwendung von Natriumperborat in Form des sogenannten Monohydrats ($NaBO_3 \cdot H_2O$) und Tetrahydrats ($NaBO_3 \cdot 4 H_2O$) zu einem wesentlich niedrigeren Restcyanidgehalt führt als die Verwendung von Wasserstoffperoxid (siehe Vergleichsbeispiel 1).

2

Im erfindungsgemäßen Verfahren wird als Peroxidverbindung Natriumpercarbonat der Formel $Na_2CO_3 \cdot 1,5\, H_2O_2$ verwendet. Mit Natriumpercarbonat gelingt es, die Entgiftung problemlos auf Restcyanidgehalte unter 0,1 mg/l zu führen, wobei gleichzeitig eine geringere Einsatzmenge an Percarbonat und eine verkürzte Reaktionsdauer als Vorteile hinzukommen. Das Percarbonat wird besonders bevorzugt als Feststoff der zu entgiftenden Lösung zugesetzt, da hier deutlich bessere Entgiftungsergebnisse erzielt werden als bei der Zugabe einer Percarbonatlösung oder in-situ-Bildung.

Zur ausreichenden Perhydrolyse der Cyanhydrine und Nitrile in Gegenwart von Manganverbindungen sind mindestens 2,5 Äquivalente Aktivsauerstoff, vorzugsweise 2,5 bis 4 Äquivalente, pro Mol Cyanhydrin bzw. Nitril erforderlich. Die optimale Menge Peroxidverbindung hängt vom Mangangehalt, dem pH-Wert, der Reaktionstemperatur und dem geforderten Restcyanidgehalt ab, läßt sich aber durch orientierende Versuche leicht ermitteln. Bevorzugte pH-Werte liegen zwischen 9 und 11 und bevorzugte Temperaturen zwischen 15 und 50 °C. Sofern erwünscht, können bei der Entgiftungsreaktion übliche Katalysatoren, wie Jodid-, Cu-, Ag- und Wolframationen, mitverwendet werden. Das Verfahren läßt sich kontinuierlich oder diskontinuierlich durchführen. Die Steuerung kontinuierlicher Ausführungsformen des erfindungsgemäßen Verfahrens kann unter Verwendung des cyanidspezifischen Redoxpotentials (gemäß z. B. der US-PS 3,970,554) durchgeführt werden.

Bisher war stets davon ausgegangen worden, daß der Einsatz an Peroxidverbindung bei der Entgiftung von Cyanhydrinen und Nitrilen, unabhängig von der Art der verwendeten Peroxidverbindung, signifikant erhöht werden mußte, wenn Zersetzungskatalysatoren, wie insbesondere Manganverbindungen, welche als äußerst wirksame Zersetzungskatalysatoren für Wasserstoffperoxid und andere Aktivsauerstoffverbindungen hinlänglich bekannt sind, selbst in geringer Menge, bei Mn im Bereich bis in den Zehntel-ppm-Bereich, zugegen sind. Durch die erfindungsgemäße Auswahl der Peroxidverbindung, nämlich Natriumpercarbonat, konnte überraschenderweise das Entgiftungsverfahren nicht nur effektiver, sondern auch wirtschaftlicher gestaltet werden. Es war nicht vorhersehbar, daß Natriumpercarbonat in Gegenwart von Zersetzungskatalysatoren, wie Mn-Verbindungen, wirksamer ist als Wasserstoffperoxid.

**Vergleichsbeispiel 1**

Die zu entgiftende Lösung enthielt:
1 g Cyanid/l, zugegeben als Glykolnitril
5 mg Mangan/l, zugegeben als $MnSO_4$.
Peroxidverbindung: Wasserstoffperoxid (50 Gew.-%)
Äquivalente Aktivsauerstoff ($O_a$) pro Mol Cyanid = 4

Reaktionsablauf

| Zeit Min | Temp. °C | pH | mg $CN^-$/l *) | Bemerkungen |
|---|---|---|---|---|
| 0 | 24 | 9,5 | 1000 | |
| 5 | 26 | 9,1 | 539 | $H_2O_2$-Zersetzung |
| 15 | 27 | 9,2 | 365 | $O_a$ + |
| 30 | 27 | 9,3 | 438 | $O_a$ + |
| 45 | 27 | 9,3 | 395 | $O_a$ + |
| 60 | 27 | 9,3 | 369 | $O_a$ + |
| 90 | 27 | 9,4 | 343 | $O_a$ + |
| 120 | 26 | 9,4 | 310 | $O_a$ − |

*) Analysenmethode: argentometrische Titration

**Vergleichsbeispiel 2**

Zu entgiftende Lösung:  gemäß Vergleichsbeispiel 1.
Peroxidverbindung:  Natriumperborat-monohydrat Zugabe als Feststoff
Äquivalente $O_a$/Mol Cyanid = 4

Reaktionsablauf

| Zeit<br>Min | Temp.<br>$^\circ$C | pH | mg $CN^-$/l | Bemerkungen |
|---|---|---|---|---|
| 0 | 24 | 9,5 | 1000 | |
| 5 | 27 | 10,4 | 328 | $O_a$ + |
| 15 | 28 | 10,4 | 216 | $O_a$ + |
| 30 | 28 | 10,4 | 190 | $O_a$ + |
| 45 | 28 | 10,4 | 164 | $O_a$ + |
| 60 | 27 | 10,4 | 159 | $O_a$ + |
| 90 | 27 | 10,4 | 150 | $O_a$ + |
| 120 | 26 | 10,3 | 150 | $O_a$ − |

**Vergleichsbeispiel 3**

Vergleichsbeispiel 1 wurde mit dem einzigen Unterschied wiederholt, daß Natriumperborat-tetrahydrat anstelle des -monohydrats eingesetzt wurde (Zugabe als Feststoff; $O_a$/CN = 4).

Reaktionsablauf

| Zeit<br>Min | Temp.<br>$^\circ$C | pH | mg $CN^-$/l | Bemerkungen |
|---|---|---|---|---|
| 0 | 24 | 9,5 | 1000 | |
| 5 | 26 | 10,4 | 510 | $O_a$ + |
| 15 | 26 | 10,4 | 260 | $O_a$ + |
| 30 | 26 | 10,4 | 156 | $O_a$ + |
| 45 | 26 | 10,5 | 122 | $O_a$ + |
| 60 | 26 | 10,5 | 114 | $O_a$ + |
| 90 | 25 | 10,5 | 104 | $O_a$ + |
| 120 | 25 | 10,5 | 99 | $O_a$ − |

**Beispiel 1**

Zu entgiftende Lösung:  gemäß Vergleichsbeispiel 1

Peroxidverbindung:        Natriumpercarbonat ($Na_2CO_3 \cdot 1,5\ H_2O_2$) Zugabe als Feststoff
Äquivalente $O_a$/Mol Cyanid = 4

Reaktionsablauf

| Zeit<br>Min | Temp.<br>$°C$ | pH | mg $CN^-$/l | Bemerkungen |
|---|---|---|---|---|
| 0 | 24 | 9,5 | 1000 | |
| 5 | 26 | 10,6 | 114 | $O_a$ + |
| 15 | 27 | 10,7 | <0,1 **) | $O_a$ + |

**) Analyse nach DIN 38405, D13

**Beispiel 2**

Beispiel 1 wurde mit dem einzigen Unterschied wiederholt, daß das Verhältnis Äquivalent $O_a$ pro Mol Cyanid = 3 (statt 4) betrug.

Reaktionsablauf

| Zeit<br>Min | Temp.<br>$°C$ | pH | mg $CN^-$/l | Bemerkungen |
|---|---|---|---|---|
| 0 | 24 | 9,5 | 1000 | |
| 5 | 25 | 10,6 | 210 | $O_a$ + |
| 15 | 26 | 10,7 | 19 | $O_a$ + |
| 30 | 26 | 10,7 | <0,1 | $O_a$ + |

**Beispiel 3**

Zu entgiftende Lösung:       gemäß Vergleichsbeispiel 1
Peroxidverbindung:          Natriumpercarbonat Zugabe als 13 gew.-%ige wäßrige Lösung
Äquivalente $O_a$/Mol Cyanid = 3

Reaktionsablauf

| Zeit<br>Min | Temp.<br>°C | pH | mg CN⁻/l | Bemerkungen |
|---|---|---|---|---|
| 0 | 24 | 9,5 | 1000 | |
| 5 | 27 | 10,5 | 208 | $O_a$ + |
| 15 | 27 | 10,7 | 42 | $O_a$ + |
| 30 | 27 | 10,7 | 31 | $O_a$ − |

## Vergleichsbeispiel 4

Beispiel 1 wurde mit dem einzigen Unterschied wiederholt, daß das Verhältnis Äquivalente $O_a$ pro Mol Cyanid = 2 (statt 4) betrug.

Reaktionsablauf

| Zeit<br>Min | Temp.<br>°C | pH | mg CN⁻/l | Bemerkungen |
|---|---|---|---|---|
| 0 | 24 | 9,5 | 1000 | |
| 5 | 26 | 10,6 | 426 | $O_a$ + |
| 15 | 27 | 10,6 | 189 | $O_a$ + |
| 30 | 26 | 10,6 | 200 | $O_a$ + |
| 45 | 26 | 10,7 | 200 | $O_a$ − |

## Patentansprüche

1.  Verfahren zum Entgiften von Cyanhydrine und/oder Nitrile mit jeweils 2 bis 5 C-Atomen enthaltenden wäßrigen Lösungen, die zusätzlich Zersetzungskatalysatoren für Peroxidverbindungen, insbesondere Manganverbindungen, enthalten, durch Perhydrolyse der Cyanoverbindungen mit Peroxidverbindungen bei Temperaturen von 5 bis 80 °C und pH-Werten von 8 bis 12,
    dadurch gekennzeichnet,
    daß man zur Perhydrolyse als Peroxidverbindung Natriumpercarbonat der Formel $Na_2CO_3 \cdot 1,5\ H_2O_2$ in einer Menge von mindestens 2,5 Äquivalenten Aktivsauerstoff pro Mol Cyanhydrin verwendet.

2.  Verfahren nach Anspruch 1,
    dadurch gekennzeichnet,
    daß die zu entgiftende Lösung Cyanhydrine, insbesondere Glykolnitril, enthält.

3.  Verfahren nach Anspruch 2,
    dadurch gekennzeichnet,
    daß man das Percarbonat in fester Form der zu entgiftenden Lösung zusetzt.

**4.** Verfahren nach einem der Ansprüche 1 bis 3,
dadurch gekennzeichnet,
daß man pro Mol Cyanhydrin Natriumpercarbonat in einer Menge 2,5 bis 4 Äquivalenten Aktivsauerstoff
verwendet.

**5.** Verfahren nach einem der Ansprüche 1 bis 4,
dadurch gekennzeichnet,
daß man die Perhydrolyse bei pH-Werten von 9 bis 11 durchführt.


## Claims

**1.** A process for the detoxication of aqueous solutions which contain cyanohydrins and/or nitriles each having 2 to 5 carbon atoms and which in addition contain decomposition catalysts for peroxide compounds, in particular manganese compounds, by perhydrolysis of the cyano compounds with peroxide compounds at temperatures of from 5 to 80°C and pH values of from 8 to 12, characterised in that the peroxide compound used for perhydrolysis is sodium percarbonate of the formula $Na_2CO_3 . 1.5 H_2O_2$ in a quantity of at least 2.5 equivalents of active oxygen per mol of cyanohydrin.

**2.** A process according to claim 1, characterised in that the solution to be detoxified contains cyanohydrins, in particular glycol nitrile.

**3.** A process asccording to claim 2, characterised in that the percarbonate is added in solid form to the solution to be detoxified.

**4.** A process according to one of the claims 1 to 3, characterised in that sodium percarbonate is added in a quantity of from 2.5 to 4 equivalents of active oxygen per mol of cyanohydrin.

**5.** A process according to one of the claims 1 to 4, characterised in that perhydrolysis is carried out at pH values of from 9 to 11.


## Revendications

**1.** Procédé pour épurer des solutions aqueuses contenant des cyanhydrines et/ou des nitriles qui contiennent en plus des catalyseurs de décomposition de composés peroxydes, notamment des composés du manganèse, par perhydrolyse de composés cyanurés par des composés peroxydes à des températures de 5 à 80°C et des pH de 8 à 12, caractérisé en ce qu'on utilise comme composé peroxyde pour la perhydrolyse, du percarbonate de sodium de formule $Na_2CO_3 . 1,5 H_2O$ à une concentration d'au moins 2,5 équivalents d'oxygène actif par mole de cyanhydrine.

**2.** Procédé selon la revendication 1, caractérisé en ce que la solution à épurer contient des cyanhydrines, notamment du nitrile de glycol.

**3.** Procédé selon la revendication 2, caractérisé en ce qu'on ajoute le percarbonate sous forme solide à la solution à épurer.

**4.** Procédé selon l'une des revendications 1 à 3, caractérisé en ce qu'on utilise par mole de cyanhydrine du percarbonate de sodium à une concentration de 2,5 à 4 équivalents d'oxygène actif.

**5.** Procédé selon l'une des revendications 1 à 4, caractérisé en ce qu'on réalise la perhydrolyse à des pH de 9 à 11.